# DEMANDE DE BREVET EUROPEEN

(11) **EP 2 595 067 A1**
(43) Date de publication de la demande: **22.05.2013**
(21) Numéro de dépôt: 11306513.0
(22) Date de dépôt: 18.11.2011
(51) Int. Cl.: G06F 17/30, G06F 3/01, H04M 3/54, H04M 3/42

(54) **PROCEDE POUR COMMANDER UNE FONCTION TELEPHONIQUE PAR RECONNAISSANCE D'IMAGE, ET TERMINAL TELEPHONIQUE POUR LA MISE EN OEUVRE DE CE PROCEDE**

(71) Demandeur: Alcatel Lucent, 75007 Paris (FR)
(72) Inventeur: Castrec, Stéphane, 29260 Le Folgoët (FR); Elleouet, Jerome, 29806 BREST (FR)
(74) Mandataire: Sciaux, Edmond

(57) **Abrégé**

Ce procédé comporte les étapes suivantes :
- capturer et mémoriser (23) au moins une image (IM);
- associer (21, 22) à cette image mémorisée une fonction téléphonique prédéterminée, par exemple un renvoi inconditionnel ;
- capturer (32) une suite d'images ;
- reconnaître (33) l'image mémorisée parmi les images de cette suite d'images ;
- commander (34) la fonction téléphonique lorsque l'image mémorisée a été reconnue parmi les images de cette suite d'images.

## Description

L'invention concerne un procédé pour commander une fonction téléphonique, et un terminal téléphonique pour la mise en oeuvre de ce procédé.

Un système de communication d'entreprise est apte à établir des communications de type voix ou vidéo, à l'intérieur d'un réseau local propre à une entreprise, en fournissant de nombreux services supplémentaires, notamment il permet de programmer le renvoi des appels destinés à un poste vers un autre poste appartenant au même réseau d'entreprise ou à un réseau extérieur. Pour cela, il comporte généralement un serveur de communication qui commute des paquets de données, et un serveur d'applications qui commande ce serveur de communication selon le service à fournir. Pour commander un service, un utilisateur utilise habituellement : soit un poste téléphonique, soit un ordinateur personnel associé à un terminal téléphonique voisin, soit un ordinateur personnel seul qui exécute un logiciel de téléphonie (appelé communément « softphone »). Dans tous les cas, commander un service téléphonique nécessite certaines manipulations : soit avec un clavier, soit avec un dispositif de pointage (souris, tablette tactile, écran tactile, etc).

Par exemple, lors de la réception d'un appel, il est connu d'afficher des fonctions téléphoniques disponibles telles que prendre l'appel, le renvoyer sur une boîte vocale, ou le renvoyer vers un numéro prédéterminé. L'utilisateur doit alors sélectionner une de ces fonctions au moyen d'un clavier ou d'un dispositif de pointage.

De même, pour commander une fonction téléphonique fournie localement par un terminal. Par exemple, pour utiliser des écouteurs et un micro montés sur un casque à la place du micro et du haut-parleur intégrés à un ordinateur utilisé comme poste téléphonique, il faut commander manuellement une commutation de signaux audio.

Le but de l'invention est de proposer un moyen encore plus simple pour commander une fonction téléphonique.

L'objet de l'invention est un procédé pour commander une fonction téléphonique, **caractérisé en ce qu'**il comporte les étapes suivantes :
- capturer et mémoriser au moins une image (IM) ;
- associer à cette image mémorisée une fonction téléphonique prédéterminée ;
- capturer une suite d'images ;
- reconnaître l'image mémorisée parmi les images de cette suite d'images ;
- commander la fonction téléphonique lorsque l'image mémorisée a été reconnue parmi les images de cette suite d'images.

Le procédé ainsi caractérisé permet de commander une fonction téléphonique de manière particulièrement simple : Une fois qu'une image d'un objet a été mémorisée et associée à une fonction téléphonique, il suffit qu'un utilisateur présente de nouveau cet objet devant une caméra vidéo, pour commander la fonction téléphonique associée à l'image mémorisée cet objet.

Dans des modes de réalisation préférés, le procédé selon l'invention peut comprendre une des caractéristiques suivantes :
La fonction téléphonique est activée de manière permanente à partir du moment une image a été reconnue dans cette suite d'images.

La fonction téléphonique est activée temporairement lorsqu'une une image a été reconnue dans cette suite d'images.

Le dispositif est un poste téléphonique mobile, et la fonction téléphonique associée à une image de ce poste téléphonique mobile est un renvoi des appels vers ce poste.

Le dispositif est un casque comportant au moins un écouteur et un micro, et la fonction téléphonique associée à une image de ce casque est un renvoi d'appel vers un ordinateur sur lequel ce casque est branché.

Un autre objet de l'invention est un terminal permettant de commander une fonction téléphonique, **caractérisé en ce qu'**il comporte :
- des moyens pour choisir et mémoriser une fonction téléphonique;
- des moyens pour capturer et mémoriser au moins une image ;
- des moyens pour associer cette image à la fonction téléphonique choisie;
- des moyens pour capturer une suite d'images ;
- des moyens pour reconnaître l'image mémorisée parmi les images de cette suite d'images ;
- et des moyens pour commander la fonction téléphonique lorsque l'image mémorisée a été reconnue parmi les images de cette suite d'images.

L'invention sera mieux comprise et d'autres caractéristiques apparaîtront à l'aide de la description ci-dessous et des figures l'accompagnant:
- La figure 1 représente schématiquement un exemple de réseau de communication d'entreprise comportant un terminal téléphonique mettant en oeuvre le procédé selon l'invention.
- Les figures 2 et 3 illustrent la première partie du procédé selon l'invention.
- La figure 4 illustre la seconde partie du procédé selon l'invention.

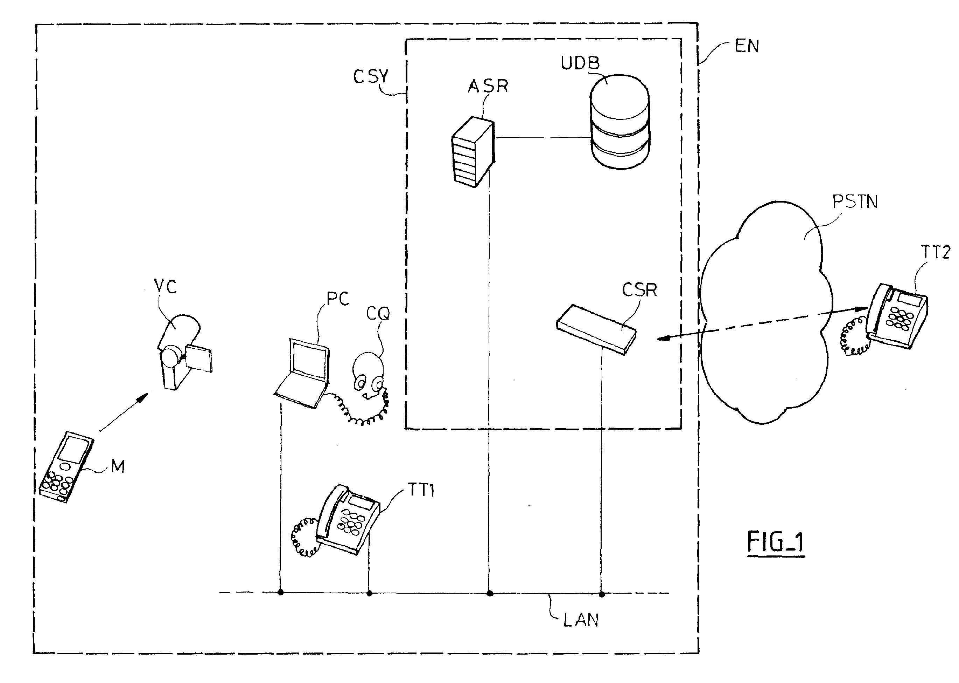

Sur la figure 1, le réseau de communication d'entreprise EN comporte au moins un terminal téléphonique fixe TT1 associé à un ordinateur personnel PC exécutant un logiciel mettant en oeuvre le procédé selon l'invention. Ce réseau EN comporte un système de communication CSY apte à établir des communications de type voix ou vidéo sur protocole Internet, à l'intérieur du réseau d'entreprise EN, en fournissant des services supplémentaires, notamment en permettant le renvoi des appels. Pour cela, il comporte un serveur de communication CSR, un serveur d'applications ASR commandant le serveur de communication CSR, et une base de données d'utilisateurs UDB reliée à ce dernier. Le serveur de communication CSR, le serveur d'applications ASR, et tous les terminaux du réseau EN sont reliés à un réseau local LAN de type Ethernet.

Le système de communication CSY est relié au réseau public fixe PSTN par une liaison utilisant le protocole Internet (IP). Une passerelle (non représentée) est intégrée au réseau public pour faire l'interface entre cette liaison IP et des terminaux classiques, analogiques, reliés à ce réseau public.

Un employé de l'entreprise dispose du poste téléphonique TT1 et de l'ordinateur personnel PC, reliés tous les deux au réseau local Ethernet LAN. L'ordinateur PC exécute un logiciel client de téléphonie, classique, qui permet à cet employé de :
- Bénéficier de fonctions téléphoniques plus évoluées que celles proposées sur son poste téléphonique TT1, grâce à une interface graphique plus évoluée. Par exemple, cet employé peut consulter l'historique de ses appels, la liste des appels manqués, etc, sur son ordinateur PC.
- Téléphoner au moyen d'un casque CQ (comportant au moins un écouteur et un microphone) branché sur la prise « écouteurs » et sur la prise « micro » de cet ordinateur PC. Le casque CQ permet de téléphoner en mains libres sans faire autant de bruit qu'en utilisant le haut-parleur du terminal téléphonique fixe TT1.

L'ordinateur PC est relié à une caméra vidéo VC (qui pourrait aussi être une webcam intégrée à la structure de l'ordinateur PC, ou le dispositif vidéo de reconnaissance de mouvements commercialisé par Microsoft sous le nom de « Kinect »). L'ordinateur PC exécute en outre un logiciel mettant en oeuvre le procédé selon l'invention. Une première partie de ce logiciel est utilisée pour le configurer préalablement, notamment pour choisir une fonction téléphonique et mémoriser une image associée à cette fonction. Cette image est l'image d'un objet qui est, de préférence, un objet qui va être utilisé pour commander la fonction téléphonique considérée. Par exemple cet objet est : un téléphone mobile GSM, un téléphone mobile DECT, un casque, etc. Chaque objet est photographié sous au moins trois angles différents (De face, de dos, et de côté), au moyen de la camera vidéo VC. Chaque image est capturée avec suffisamment de détails pour pouvoir distinguer différents modèles de téléphone.

Une seconde partie de ce logiciel traite automatiquement une suite d'images capturées par la caméra vidéo VC : Elle essaie de reconnaître l'image mémorisée, parmi les images de cette suite. Lorsqu'elle reconnaît l'image mémorisée, elle commande la fonction téléphonique associée à l'image qui a été reconnue. Plusieurs fonctions peuvent être associées respectivement à plusieurs images distinctes.

Selon un choix préalable de l'utilisateur:
- soit la fonction téléphonique est activée de manière permanente à partir du moment où une image mémorisée a été reconnue dans cette suite d'images ;
- soit la fonction téléphonique est activée de manière temporaire, par exemple pour renvoyer un appel pour lequel un signal de sonnerie est en cours de réception par le terminal téléphonique fixe TT1, ou pour renvoyer un appel pour lequel une communication a déjà été établie avec le terminal téléphonique fixe TT1.

Dans un premier exemple, l'objet qui est présenté à la camera vidéo VC est un téléphone mobile M, et la fonction téléphonique associée à une image de ce téléphone mobile M est le renvoi d'un appel unique, ou le renvoi de tous les appels, vers ce poste mobile M.

Dans un second exemple, le dispositif est le casque CQ, et la fonction téléphonique associée à une image de ce casque est le renvoi d'un appel unique, ou le renvoi de tous les appels, vers le logiciel de téléphonie de l'ordinateur PC. L'image du casque CQ peut être prise en présentant le casque seul devant la caméra vidéo VC, ou bien en présentant le visage de l'utilisateur portant le casque sur sa tête. La fonction associée peut aussi être commandée par une pluralité d'images (Une image du casque seul et une image du casque sur la tête, ou plusieurs images prises sous des angles différents).

Dans ces deux exemples, le renvoi est activé, selon le choix préalable de l'utilisateur:
- soit de manière temporaire, de manière à commander le renvoi d'un seul appel qui est en cours de réception par le terminal téléphonique fixe TT1, ou qui est déjà établi, si une communication a déjà été établie avec le terminal téléphonique fixe TT1;
- soit de manière permanente, pour renvoyer tous les appels.

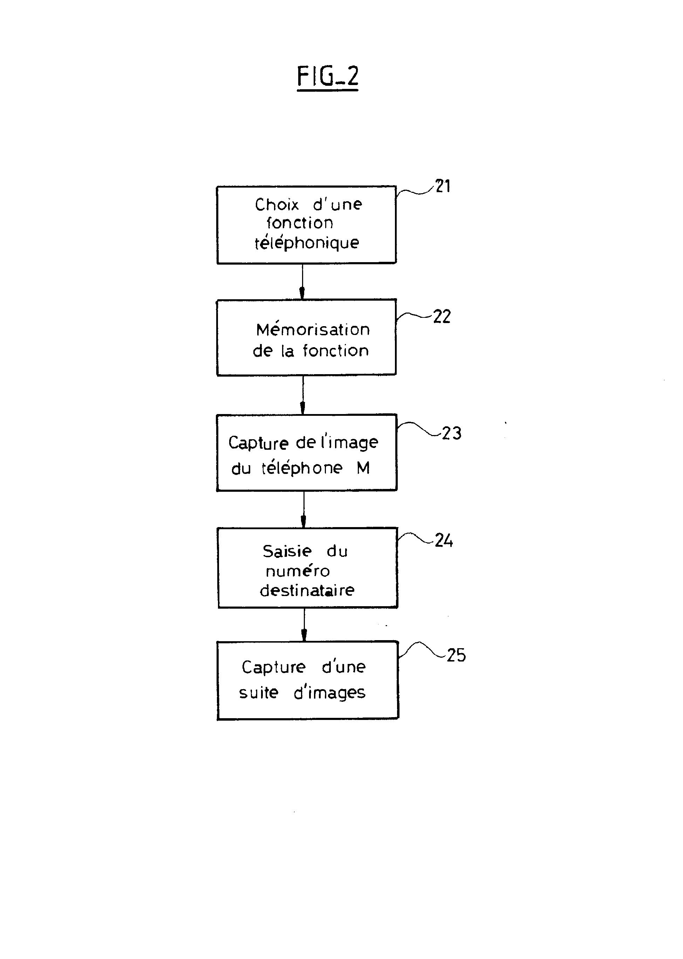

La **figure 2** illustre la première partie du procédé selon l'invention en représentant les étapes réalisées une fois pour toutes, par un utilisateur, pour configurer le logiciel exécuté sur l'ordinateur PC pour un exemple de mise en oeuvre le procédé selon l'invention.
- **Etape 21 :** Dans cet exemple, l'utilisateur choisit l'une des deux fonctions téléphoniques suivantes :
   - Renvoyer les appels de manière permanente, dés qu'une image a été reconnue.
   - Renvoyer un seul appel qui est en cours de réception par le terminal téléphonique fixe TT1, ou qui est déjà établi, si une communication a déjà été établie avec le terminal téléphonique fixe TT1, au moment où une image a été reconnue.
- **Etape 22 :** Le logiciel mémorise cette option dans l'ordinateur PC.
- **Etape 23 :** L'utilisateur présente son téléphone mobile M devant la caméra vidéo VC, et commande la capture d'une image de ce téléphone mobile M, puis la mémorisation de cette image dans l'ordinateur PC.
- **Etape 24 :** L'utilisateur saisit un numéro de téléphone destinataire du renvoi.
   (De préférence c'est le numéro du téléphone mobile M). Le logiciel associe ce numéro à l'image mémorisée, et à la fonction téléphonique choisie à l'étape 21 ;
- **Etape 25 :** Le logiciel capture ensuite une suite d'images (Tout ce qui visible devant la camera vidéo VC), et essaye de reconnaître parmi ces images une image qui a été mémorisée.

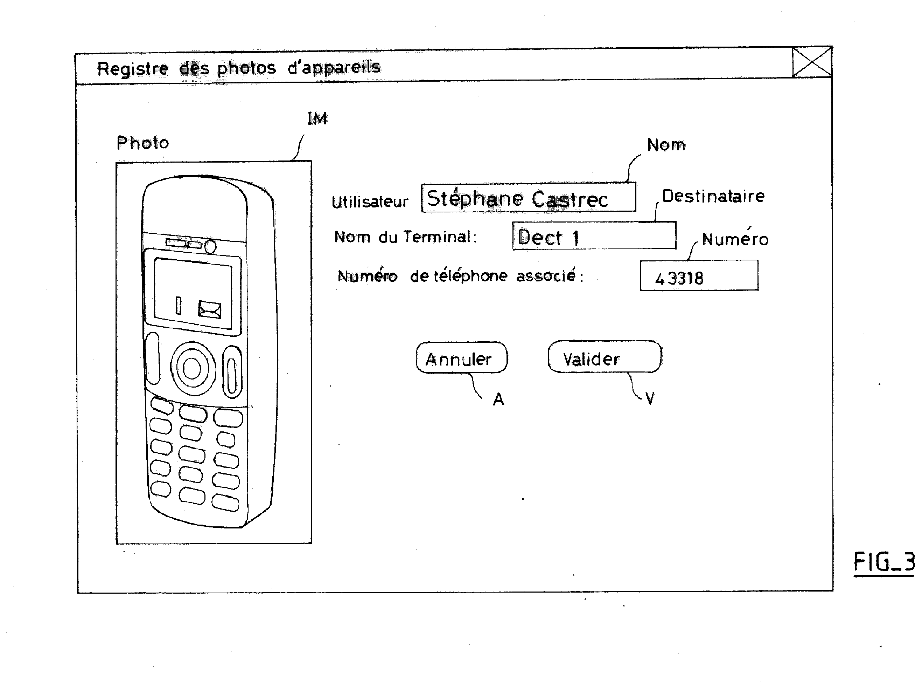

La **figure 3** illustre la première partie du procédé selon l'invention pour cet exemple de mise en oeuvre le procédé selon l'invention, en représentant l'interface graphique utilisée pour configurer un renvoi, après l'étape22. L'interface affiche à gauche l'image IM prise par la camera vidéo, sous la commande de l'utilisateur au moment où il présente le poste téléphonique M devant la caméra vidéo VC. L'interface affiche à droite trois champs à remplir avec des informations saisies par l'utilisateur:
- Un champ « Nom » pour le nom de l'utilisateur. Il sert à identifier son terminal fixe TT1, la base de données utilisateurs UBD permettant d'associer un nom à un numéro de terminal fixe du réseau d'entreprise EN.
- Un champ « Destinataire » pour le nom du terminal destinataire. De préférence, le terminal destinataire est aussi l'objet dont l'image commandera un renvoi d'appel. Le nom du terminal (par exemple DECT1) sert au logiciel à identifier le type de réseau auquel est relié le terminal destinataire du renvoi.
- Un champ « Numéro » pour le numéro du terminal destinataire du renvoi.

L'interface affiche, en bas, un bouton A pour annuler la saisie, et un bouton V pour valider la saisie. Lorsque l'utilisateur valide sa saisie, cela déclenche alors :
- L'enregistrement de cette image IM et de ces données dans l'ordinateur PC.
- L'activation de la seconde partie du logiciel, qui détectera cette image IM dans la suite des images capturées par la caméra vidéo VC. Dans cet exemple, cette seconde partie du logiciel commandera alors au serveur d'application ASR le renvoi d'appel vers ce terminal M chaque fois que l'image IM sera reconnue pendant la réception d'un signal de sonnerie sur le terminal téléphonique fixe TT1, ou en cours de communication déjà établie. L'ordinateur PC sera informé de cet appel par le serveur d'applications ASR, de manière classique.

Dans d'autres exemples de mise en oeuvre où l'utilisateur souhaite que le renvoi soit programmé de manière permanente pour tous les appels à partir du moment où l'image IM a été reconnue, le nom de l'utilisateur, le numéro destinataire du renvoi, et l'ordre de renvoi inconditionnel sont enregistrées aussi dans la base de données d'utilisateurs UDB, de manière à programmer un renvoi permanent des appels destinés au terminal TT1 correspondant au nom d'utilisateur saisi. Dans ce cas, aucun appel ne sera plus adressé au terminal fixe TT1 jusqu'à ce que l'utilisateur annule cette configuration.

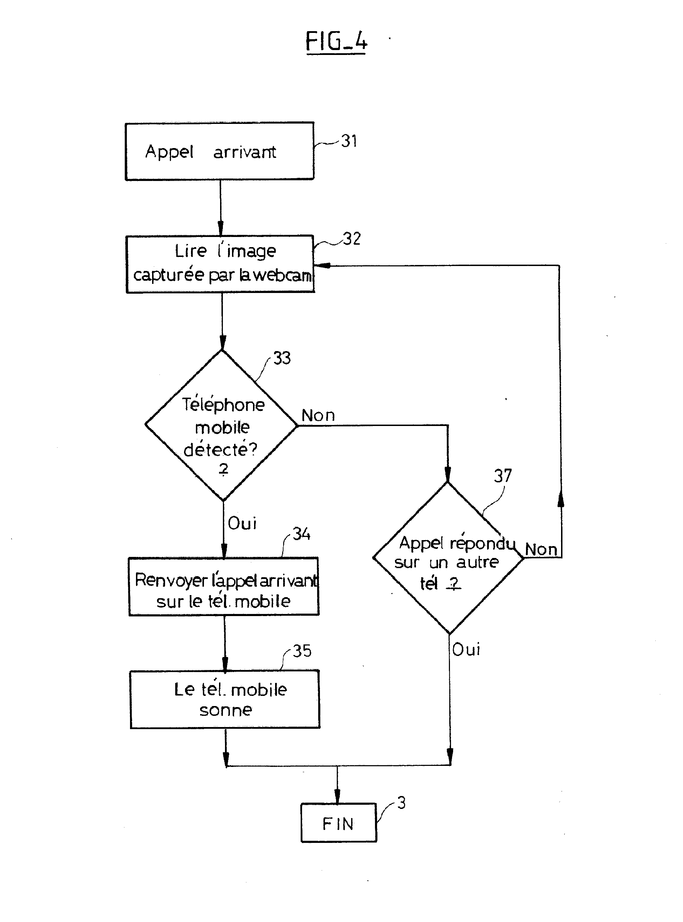

La **figure 4** illustre la seconde partie du procédé selon l'invention, en représentant les opérations réalisées automatiquement dans cet exemple de mise en oeuvre où l'utilisateur a configuré le logiciel pour renvoyer un seul appel qui est en cours de réception par le terminal téléphonique fixe TT1, ou qui est déjà établi, si une communication a déjà été établie avec le terminal téléphonique fixe TT1, au moment où une image est reconnue.

**Etape 31 :** Un terminal quelconque, par exemple le terminal TT2, relié au réseau public PSTN, appelle le terminal fixe TT1.Il sonne.

**Etape 32 :** L'utilisateur ne veut pas répondre sur son terminal fixe TT1 parce qu'il veut quitter son bureau. Il prend son terminal mobile M et le présente devant la camera vidéo VC pour qu'elle capture des images de ce terminal mobile M. Le logiciel exécuté sur l'ordinateur PC compare une image capturée avec l'image (ou les images mémorisée) préalablement sous la commande de l'utilisateur.

**Etape 33 :** S'il reconnait l'image du terminal mobile M, il va chercher les données de renvoi qui ont été mémorisées en association avec l'image qu'il a reconnue, et il passe à l'étape 34. S'il n'a pas reconnu cette image, il va essayer de reconnaître une image suivante, à l'étape 32, mais au préalable il fait l'étape 37.

**Etape 34 :** Le logiciel exécuté sur l'ordinateur PC active un renvoi conforme aux données qui ont été mémorisées en association avec l'image qu'il a reconnue. Dans cet exemple, le renvoi consiste à renvoyer un appel pour lequel le signal de sonnerie est en cours de réception, ou qui a été établi. Il commande le serveur d'applications AS pour renvoyer cet appel vers le terminal destinataire prévu : Le terminal mobile M.

**Etape 35** : L'appel renvoyé fait sonner le terminal mobile M.

**Etape 36** : Le logiciel a terminé sa tâche. Il attend un nouvel appel.

**Etape 37** : Avant d'essayer de traiter une nouvelle image, le logiciel vérifie que l'appel n'a pas été répondu par un terminal autre que le terminal fixe TT1 (parce qu'une image antérieure aurait été reconnue et aurait déjà déclenché un renvoi, ou si l'utilisateur a pris l'appel sur son poste fixe TT1). Si l'appel a déjà été répondu, le logiciel passe à l'étape 36. Sinon il repasse à l'étape 32 pour traiter une nouvelle image fournie par la caméra vidéo VC.

## Revendications

1. Procédé pour commander une fonction téléphonique, **caractérisé en ce qu'**il comporte les étapes suivantes :
- capturer et mémoriser (23) au moins une image (IM);
- associer (21, 22) à cette image mémorisée une fonction téléphonique prédéterminée ;
- capturer (32) une suite d'images;
- reconnaître (33) l'image mémorisée parmi les images de cette suite d'images ;
- commander (34) la fonction téléphonique lorsque l'image mémorisée a été reconnue parmi les images de cette suite d'images.

2. Procédé selon la revendication 1, dans lequel la fonction téléphonique est activée de manière permanente à partir du moment une image (IM) a été reconnue dans cette suite d'images.

3. Procédé selon la revendication 1, dans lequel la fonction téléphonique est activée temporairement lorsqu'une une image (IM) a été reconnue dans cette suite d'images.

4. Procédé selon la revendication 1, dans lequel le dispositif est un poste téléphonique mobile (M), et la fonction téléphonique associée à une image de ce poste téléphonique mobile est un renvoi des appels vers ce poste.

5. Procédé selon la revendication 1, dans lequel le dispositif est un casque (CQ) comportant au moins un écouteur et un micro, et la fonction téléphonique associée à une image de ce casque est un renvoi d'appel vers un ordinateur (PC) sur lequel ce casque est branché.

6. Terminal (PC, VC) permettant de commander une fonction téléphonique, **caractérisé en ce qu'**il comporte :
- des moyens pour choisir et mémoriser (21, 22) une fonction téléphonique;
- des moyens (VC) pour capturer et mémoriser au moins une image (IM);
- des moyens pour associer (23, 24) cette image à la fonction téléphonique choisie ;
- des moyens pour capturer (32) une suite d'images ;
- des moyens pour reconnaître (33) l'image mémorisée parmi les images de cette suite d'images ;
- et des moyens pour commander (34) la fonction téléphonique lorsque l'image mémorisée a été reconnue parmi les images de cette suite d'images.

7. Dispositif programmable comportant des moyens de stockage sur lesquels est enregistré un programme, ce programme comportant des instructions qui, lorsqu'elles sont exécutées, réalisent les étapes du précédé selon l'une des revendications 1 à 5.

8. Moyen de stockage sur lequel est enregistré un programme comportant des instructions qui, lorsqu'elles sont exécutées sur un dispositif programmable, réalisent les étapes du précédé selon l'une des revendications 1 à 5.
